# EUROPÄISCHE PATENTSCHRIFT

(11) **EP 1 855 372 B1**
(45) Veröffentlichungstag und Bekanntmachung des Hinweises auf die Patenterteilung: **14.03.2012**
(21) Anmeldenummer: 07105622.0
(22) Anmeldetag: 04.04.2007
(51) Int. Cl.: H02K 3/47, H02K 23/56

(54) **Glockenankerspule**
Bell-type armature coil
Bobine d'armature de cloche

(30) Priorität: 11.05.2006 DE 202006007619 U
(43) Veröffentlichungstag der Anmeldung: 14.11.2007
(73) Patentinhaber: Dr. Fritz Faulhaber GmbH & Co. KG, 71101 Schönaich (DE)
(72) Erfinder: Bertolini, Thomas, 77866, Rheinau (DE); Keller, Roland, 72181, Starzach-Felldorf (DE); Brugger, Roland, 71155, Altdorf (DE); Kirchner, Roland, 71101, Schönaich (DE); Renner, Hubert, 71120, Grafenau-Döffingen (DE); Wagner, Helmut, 71101, Schönaich (DE)
(74) Vertreter: Patentanwälte Dr. Solf & Zapf

(56) Entgegenhaltungen:
- DE-A1- 4 021 256
- GB-A- 1 598 165
- JP-A- 10 150 757
- JP-A- 54 061 608
- JP-A- 55 160 957
- JP-A- 2002 064 966
- US-A- 4 286 375

## Beschreibung

Die vorliegende Erfindung betrifft eine Glockenankerspule, bestehend aus einer aus einem Wickeldraht gewickelten hohlzylindrischen Spulenwicklung, in deren Spulenöffnung einendig eine Spulenträgerplatte eingesetzt ist, wobei die Spulenträgerplatte als Leiterplatte ausgebildet ist, an die die Spulenwicklung mit ihren Leiterenden angeschlossen ist.

Eine derartige Spule ist beispielsweise aus der US 4,286,375 A bekannt.

Derartige Glockenankerspulen werden insbesondere bei DC-Motoren mit eisenlosem Rotor eingesetzt. Dabei bildet die Glockenankerspule, die insbesondere als selbsttragende zylindrische Spule in Schrägwicklung ausgebildet ist, den aktiven Teil des Rotors. Sie zeichnet sich durch ein sehr niedriges Trägheitsmoment aus. Wegen des fehlenden Eisenankers gibt es keine Eisenverluste und kein magnetisches Rastmoment. Der Rotor hält in jeder beliebigen Stellung an und die Drehzahl hängt nur von der Versorgungsspannung und vom Lastmoment ab. Der hierzu passende Stator besteht zweckmäßigerweise aus einem zweipoligen Magneten, und das Gehäuse bildet den Eisenrückschluss. An der als Motorwicklungsträger bzw. Spulenträger ausgebildeten Trägerplatte kann auch der mechanische Kommutator ausgebildet sein.

Zum Wickeln der Glockenankerspule bestehen verschiedene Wickelverfahren, die wie folgt arbeiten.

Das erste Wickelverfahren sieht das Wickeln eines Teiles der Wicklung auf einer Hülse oder einem Dom mit Backlackdraht vor. Es folgt das Fixieren des Drahtes durch Erwärmen als sogenanntes Zwischenbacken, dann werden weitere Teilwicklungen gewickelt und zwischengebacken, bis die Spule fertig gewickelt ist. Die abschließende Formgebung der Spule erfolgt durch sogenanntes Fertigbacken. Die Drahtenden müssen dann noch zur Kontaktierung und zum Anschluss vorbereitet werden.

Ein weiteres Verfahren besteht darin, dass die gesamte Wicklung auf einen Dom gewickelt wird, an dessen Umfang an beiden Enden feinverteilte Stifte angebracht sind, welche die Wicklung während des Vorgangs fixieren. Somit kann die gesamte Wicklung kontinuierlich gewickelt werden, ohne dass ein Zwischenbacken erforderlich ist. Anschließend erfolgt die Entfernung der feinverteilten Stifte, das Abziehen der Rohspule, das Fertigbacken und das Vorbereiten der Anschlüsse zur Kontaktierung und zum Anschließen.

Ein anderes Verfahren besteht darin, dass eine Längsspule gewickelt wird, die einen vier- oder seckseckigen Querschnitt besitzt. Diese bewickelte Längsspule wird dann anschließend flachgedrückt und die flachgedrückte Spule zu einer Zylinderspule zusammengerollt. Anschließend erfolgt das Fertigbacken und das Vorbereiten der Anschlüsse und das Kontaktieren.

Bei Glockenankermotoren in der Ausführung als Gleichstromkommutatormotoren mit rotierendem Glockenanker muss der Kommutator zusätzlich an die Spule angefügt und befestigt werden. Bei Ausführungen mit feststehender Spule - elektronisch kommutierte Motoren - ist eine Kontaktierung erforderlich sowie häufig eine Anbringung und Ausrichtung von Hallsensoren.

Der vorliegenden Erfindung liegt die Aufgabe zu Grunde, und zwar ausgehend von einer gattungsgemäßen Glockenankerspule, deren Aufbau derart zu verbessern, dass sie mit einem kontinuierlichen Verfahren schnell und mit wenigen Zwischenschritten hergestellt werden kann.

Erfindungsgemäß wird dies dadurch erreicht, dass die Leiterplatte als Wicklungshilfe mit am Umfang angeordneten Wickelvorsprüngen ausgebildet ist, um die der Wickeldraht zur Bildung der vorzugsweise als Schrägwicklung ausgebildeten Spulenwicklung geführt ist, wobei insbesondere die Spulenwicklung als kontinuierliche Wicklung hergestellt wird. Durch die erfindungsgemäße Ausführungsform wird ein kontinuierliches Verfahren ermöglicht, wobei kein zusätzliches Handling beim Kontaktieren erforderlich ist, da die Kontakte bereits auf der Leiterplatte an der richtigen Position ausgebildet sind und ebenfalls kein zusätzliches Handling für die Anbringung der vormontierten Hallsensoren erforderlich ist. Zudem wird eine Verbesserung des Backprozesses ermöglicht, da ein elektrisches Aufheizen der Spule von innen möglich ist und damit eine geringere Gefahr besteht, eine mechanische Beschädigung beim Pressen zu verursachen.

Erfindungsgemäß wird durch die eingesetzte Leiterplatte als sogenannte "verlorene Wickelhilfe" (die Leiterplatte wird bereits beim Wicklungsprozess mit eingewickelt) der Wicklungsprozess wesentlich vereinfacht. Durch die bereits miteingewickelte Leiterplatte wird die Position von Leiteranschlüssen und von eventuell erforderlichen Hallsensoren eindeutig vorgegeben. Weiterhin ermöglicht die erfindungsgemäße Ausgestaltung, dass an der Leiterplatte eine Welle mit Kommutator eingespritzt werden kann, und zwar für die Ausführung als Rotor für einen Gleichstromkommutatormotor. Zudem kann erfindungsgemäß die gesamte Spule mit Kunststoff umspritzt werden, wodurch sie mechanisch robust ist.

Insgesamt wird durch die Erfindung eine kürzere Prozesszeit mit weniger Arbeitsschritten erreicht, wodurch eine Qualitätssteigerung und eine Kostensenkung erzielt wird.

Weitere vorteilhafte Ausführungen der Erfindung sind in den Unteransprüchen enthalten.

An Hand des in den beiliegenden Zeichnungen dargestellten Ausführungsbeispiels wird die Erfindung näher erläutert.

Es zeigen:
- Fig. 1: einen Längsschnitt durch eine erfindungsgemäße Glockenankerspule,
- Fig. 2: eine Ansicht auf die Glockenankerspule gemäß Fig. 1 entsprechend des Pfeils II,
- Fig. 3: eine Ansicht einer erfindungsgemäßen Leiterplatte,
- Fig. 4, 5 und 6: eine Front-, Rück- und Seitenansicht einer erfindungsgemäßen Leiterplatte.
- Fig.7: eine Ansicht einer weiteren Ausgestaltung einer erfindungsgemäßen Leiterplatte.

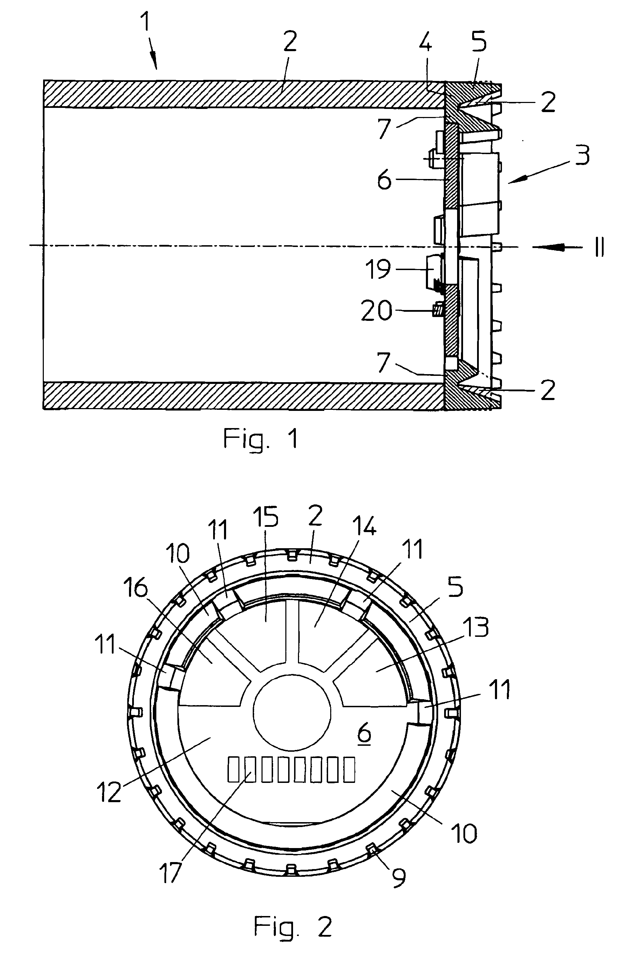

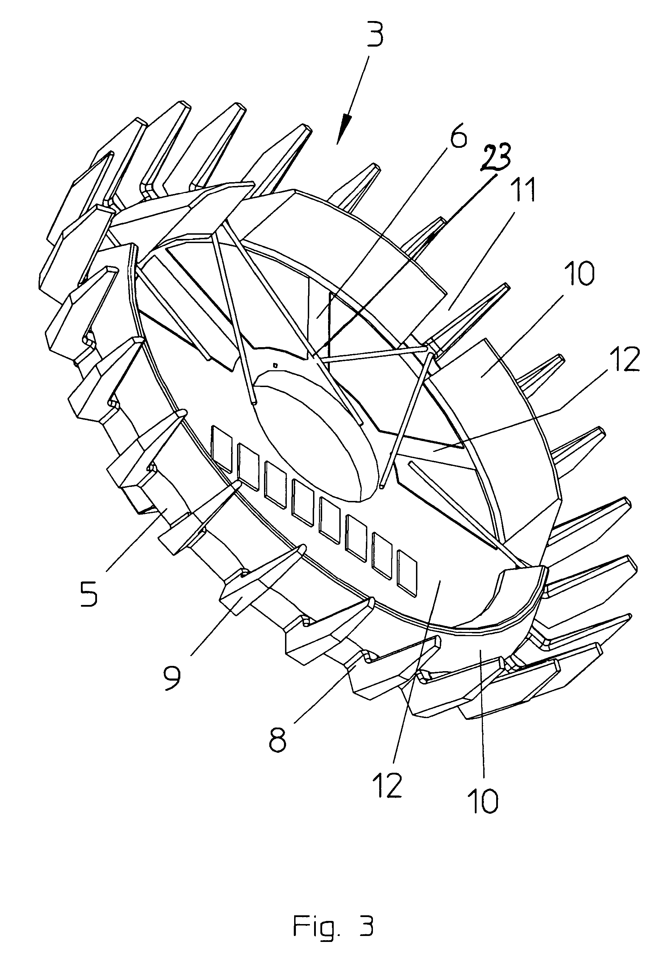

Wie sich aus Fig. 1 ergibt, besteht eine erfindungsgemäße Glockenankerspule 1 aus einer aus einem Wickeldraht gewickelten hohlzylindrischen Spulenwicklung 2 in deren Spulenöffnung einendig ein Spulenträger angeordnet ist, der als Leiterplatte 3 ausgebildet ist. An dieser Leiterplatte 3 ist die Spulenwicklung 2 mit ihren Leiterenden angeschlossen. Die Spulenwicklung 2 ist vorzugsweise als Schrägwicklung ausgebildet. Der Wickeldraht der Spulenwicklung ist vorzugsweise als Backlackdraht hergestellt, so dass nach Herstellen der Spulenwicklung ein Verbacken derselben möglich ist. Die Leiterplatte 3 ist erfindungsgemäß als Wicklungshilfe mit am Umfang angeordneten Vorsprüngen 4 hergestellt, wobei um die Vorsprünge 4 der Wickeldraht zur Bildung der Spulenwicklung 2 gewickelt wird. Die Spulenwicklung 2 kann kontinuierlich gewickelt werden, ohne dass ein Zwischenbacken erforderlich ist. Nach dem Fertigwickeln der Spulenwicklung 2 verbleibt die Leiterplatte 3 als Spulenträger in der fertig gewickelten und durch Fertigbacken fixierten Spule. Es kann unmittelbar an der integrierten Leiterplatte 3 eine Kontaktierung der Spulenenden erfolgen. Im dargestellten Ausführungsbeispiel ist die Leiterplatte 3 zweiteilig ausgebildet. Sie besteht aus einem äußeren Kunststoffring 5 und einer in diesen Kunststoffring 5 eingesetzten Leiterplattenscheibe 6. Die Leiterplattenscheibe 6 kann in den Kunststoffring 5 eingeclipst oder eingeklebt sein. Der Kunststoffring 5 besteht aus einem Ringteil 7, an dem radial verlaufende Radialfortsätze 8 und an diesen endseitig axial gerichtete Hakenfortsätze 9 ausgebildet sind. Dies ist aus Fig. 3 zu erkennen, die die zweiteilige Leiterplatte 3 zeigt. Wie aus Fig. 1 zu ersehen ist, wird um die hakenförmigen Fortsätze 9 die Spulenwicklung 2 gewickelt, bis der Spulenkörper aufgebaut ist. Die hakenförmigen Fortsätze 9 bilden mit ihrer dem Spulenkörper zugewandten Rückseite zusammen mit den Radialfortsätzen 8 eine Anlagefläche für den Spulenringkörper. Der Ringteil 7 weist einen axial nach außen weisenden umlaufenden Ringsteg 10 auf, der konzentrisch zu den hakenförmigen Fortsätzen 9 angeordnet ist. Zwischen dem Ringsteg 10 und den hakenförmigen Fortsätzen 9 befindet sich der Wickelraum zur Aufnahme der die hakenförmigen Fortsätze 9 umfassenden Spulenwicklung. In dem Ringsteg 10 befinden sich Durchbrüche 11, durch die die einzelnen Spulenwicklungsabschnitte verbindenden Wickeldrahtabschnitte verlaufen.

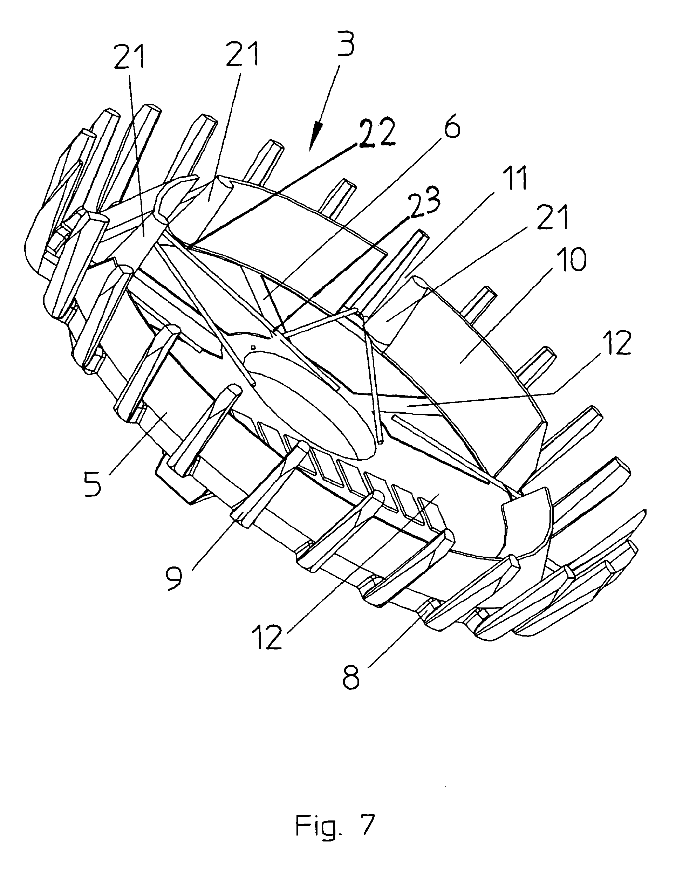

Wie in Fig. 7 dargestellt ist, in der gleiche Teile wie in Fig. 3 mit denselben Bezugszeichen versehen sind, kann einseitig am Rand der Durchbrüche 11 eine Drahtklemmvorrichtung 21 vorgesehen sein. Diese besteht aus einer kegelstumpfförmigen Randverdickung, die an ihrer Unterseite einen Schlitz 22 ausbildet, in dem der Wickeldraht 23 klemmend geführt ist.

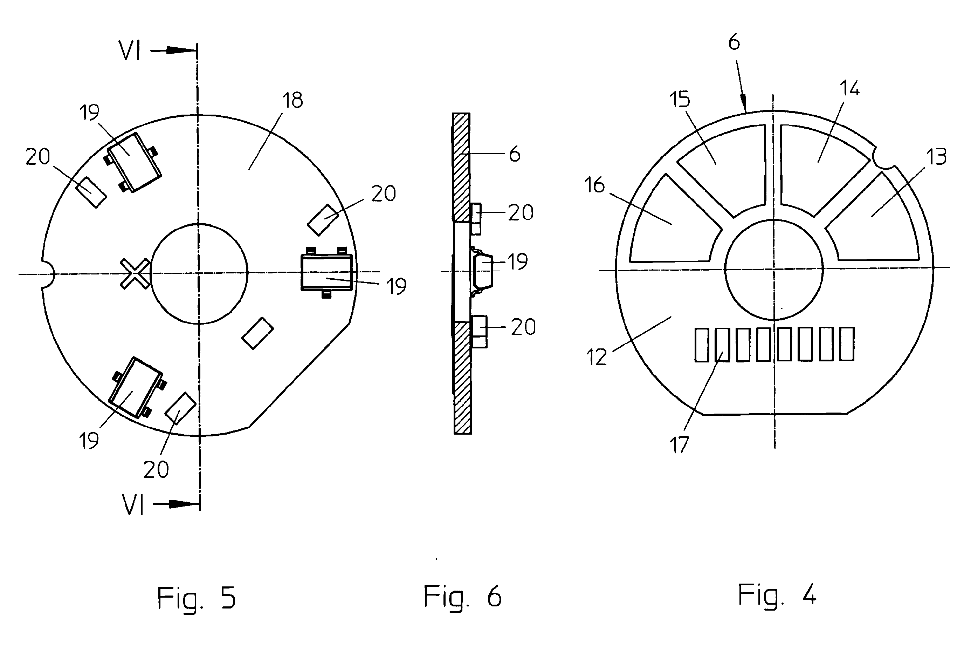

Wie aus den Fig. 4 bis 6 zu erkennen ist, weist die z. B. Leiterplattenscheibe 6 an ihrer außen liegenden Frontseite 12 kreissegmentförmige Patch-Randfelder 13, 14, 15, 16 zum Anschluss der Enden von drei Wicklungssträngen auf, wobei die beiden außen liegenden Randfelder 13 und 16 zum Anschluss des Anfangs und des Endes desselben Stranges dienen. Weiterhin befinden sich unterhalb der oberen Felder vorzugsweise in einer Reihe Anschlusspads 17 für die Leiter eines Flachbandkabels. Auf ihrer innenliegenden Rückseite 18 weist die Leiterplattenscheibe 6 z. B. Hallsensoren 19 auf mit den für diese erforderlichen Pull-up-Widerständen 20. Es können auch weitere Bauteile insbesondere auf der Rückseite 18 montiert sein.

Erfindungsgemäß kann die Leiterplatte 3 einstückig sein. In diesem Fall sind an der Leiterplatte 3 umfangsgemäß Nuten vorgesehen, zwischen denen sich jeweils Wickelfortsätze befinden, um die die Spulenwicklung 2 gewickelt wird.

Weiterhin ist es ebenfalls erfindungsgemäß möglich, an der Leiterplatte 3 selbst einen Kommutator mit Welle anzuspritzen, sofern die erfindungsgemäße Glockenankerspule für eine Ausführung als Rotor für einen Gleichstromkommutatormotor Verwendung finden soll.

Die vorliegende Erfindung ist nicht auf die beschriebene Ausführungsform beschränkt, sondern umfasst alle gleichwirkenden Ausführungen der einzelnen Merkmale.

## Patentansprüche

1. Glockenankerspule, bestehend aus einer aus einem Wickeldraht gewickelten hohlzylindrischen Spulenwicklung (2), in deren Spulenöffnung einendig eine Spulenträgerplatte eingesetzt ist, wobei die Spulenträgerplatte als Leiterplatte ausgebildet ist, an die die Spulenwicklung (2) mit ihren Leiterenden angeschlossen ist,
**dadurch gekennzeichnet, dass** die Leiterplatte (3) als Wicklungshilfe mit am Umfang angeordneten Wickelvorsprüngen (4) ausgebildet ist, um die der Wickeldraht zur Bildung der vorzugsweise als Schrägwicklung ausgebildeten Spulenwicklung (2) geführt ist.

2. Glockenankerspule nach Anspruch 1,
**dadurch gekennzeichnet, dass,** die Spulenwicklung (2) als kontinuierliche Wicklung hergestellt ist.

3. Glockenankerspule nach Anspruch 1 oder 2,
**dadurch gekennzeichnet, dass** die Vorsprünge (4) der Leiterplatte (3) zwischen am Umfang derselben mit gleichen Abständen ausgebildeten Nuten gebildet sind.

4. Glockenankerspule nach einem der Ansprüche 1 bis 3,
**dadurch gekennzeichnet, dass** die Leiterplatte (3) aus zwei Teilkörpern (5, 6) besteht, und zwar aus einem äußeren Kunststoffring (5) mit umfangsgemäß angeordneten Wickelvorsprüngen (8, 9) und einer im Kunststoffring (5) eingesetzten Leiterplattenscheibe (6).

5. Glockenankerspule nach Anspruch 4,
**dadurch gekennzeichnet, dass** die Wickelvorsprünge (4) aus Radialfortsätzen (8) bestehen, an deren freien Enden ein axial gerichteter Hakenfortsatz (9) ausgebildet ist.

6. Glockenankerspule nach Anspruch 4 oder 5,
**dadurch gekennzeichnet, dass** die Leiterplattenscheibe (6) eingeclipst oder eingeklebt ist.

7. Glockenankerspule nach einem der Ansprüche 1 bis 6,
**dadurch gekennzeichnet, dass** auf der Leiterplatte (3, 6) Hallsensoren (18) als Drehstellungssensoren angeordnet sind.

8. Glockenankerspule nach einem der Ansprüche 1 bis 7,
**dadurch gekennzeichnet,dass** anderLeiterplatte(3)ein konzentrisch zur Spulenachse angeordneter mechanischer Kommutator mit Welle befestigt ist.

9. Glockenankerspule nach einem der Ansprüche 1 bis 8,
**dadurch gekennzeichnet, dass** der Wickeldraht als Backdraht ausgebildet ist.

10. Glockenankerspule nach einem der Ansprüche 1 bis 9,
**dadurch gekennzeichnet, dass** die Spulenwicklung (2) mit einer Kunststoffschicht umspritzt ist.

11. Glockenankerspule nach einem der Ansprüche 1 bis 10,
**dadurch gekennzeichnet, dass** die Leiterplatte (3) mit einer Drahtklemmvorrichtung (21) ausgebildet ist.

## Claims

1. A bell-type armature coil, consisting of a hollow-cylindrical coil winding (2) wound from a winding wire, in one end of the coil opening of which coil winding (2) there is inserted a coil mounting plate, wherein the coil mounting plate is in the form of a printed circuit board to which the coil winding (2) is attached by means of its conductor ends, **characterised in that** the printed circuit board (3) is in the form of a winding aid with winding projections (4) arranged at the circumference, around which projections the winding wire is guided to form the coil winding (2) preferably in the form of oblique winding.

2. A bell-type armature coil according to claim 1, **characterised in that** the coil winding (2) is manufactured as continuous winding.

3. A bell-type armature coil according to claim 1 or 2, **characterised in that** the projections (4) of the printed circuit board (3) are formed between slots formed equally spaced at the circumference of the latter.

4. A bell-type armature coil according to any one of claims 1 to 3, **characterised in that** the printed circuit board (3) is composed of two partial bodies (5, 6), namely of an outer plastics ring (5) with circumferentially arranged winding projections (8, 9) and a printed circuit board disc (6) inserted in the plastics ring (5).

5. A bell-type armature coil according to claim 4, **characterised in that** the winding projections (4) consist of radial prolongations (8) at the free ends of which there is formed an axially directed hook prolongation (9).

6. A bell-type armature coil according to claim 4 or 5, **characterised in that** the printed circuit board disc (6) is clipped in or adhesively stuck in.

7. A bell-type armature coil according to any one of claims 1 to 6, **characterised in that** Hall sensors (18) are arranged on the printed circuit board (3, 6) as rotational position sensors.

8. A bell-type armature coil according to any one of claims 1 to 7, **characterised in that** a mechanical commutator with shaft, arranged concentric with the coil axis, is secured to the printed circuit board (3).

9. A bell-type armature coil according to any one of claims 1 to 8, **characterised in that** the winding wire is in the form of a stove enamel wire

10. A bell-type armature coil according to any one of claims 1 to 9, **characterised in that** the coil winding (2) is extrusion coated with a plastics coat.

11. A bell-type armature coil according to any one of claims 1 to 10, **characterised in that** the printed circuit board (3) has a wire clamping device (21).

## Revendications

1. Bobine d'armature de type cloche, comprenant un enroulement de bobine (2) cylindrique creux, enroulé, à base d'un fil d'enroulement, ouverture de bobine dans laquelle une plaque support de bobine est insérée par une extrémité, la plaque support de bobine étant conçue sous la forme d'une carte à circuits imprimés, à laquelle l'enroulement de bobine (2) est raccordé par ses extrémités de conducteurs,
**caractérisée en ce que**
la carte à circuits imprimés (3) est conçue sous la forme d'une aide à l'enroulement avec des saillies d'enroulement (4) disposées sur le pourtour, saillies autour desquelles le fil d'enroulement est guidé pour former l'enroulement de bobine (2) conçue de préférence sous la forme d'un enroulement incliné.

2. Bobine d'armature de type cloche selon la revendication 1, **caractérisée en ce que** l'enroulement de bobine (2) est fabriqué sous la forme d'un enroulement continu.

3. Bobine d'armature de type cloche selon la revendication 1 ou 2,
**caractérisée en ce que** les saillies (4) de la carte à circuits imprimés (3) sont formées entre des rainures réalisées sur le pourtour de cette carte à des espacements identiques.

4. Bobine d'armature de type cloche selon l'une des revendications 1 à 3,
**caractérisée en ce que** la carte à circuits imprimés (3) est formée de deux corps partiels (5, 6), à savoir une bague plastique (5) extérieure avec des saillies d'enroulement (8, 9) disposées sur le pourtour et un disque de carte à circuits imprimés (6) inséré dans la bague plastique (5).

5. Bobine d'armature de type cloche selon la revendication 4,
**caractérisée en ce que** les saillies d'enroulement (4) sont constituées de prolongements radiaux (8), sur les extrémités libres desquels est conçu un prolongement en forme de crochet (9) dirigé de façon axiale.

6. Bobine d'armature de type cloche selon la revendication 4 ou 5,
**caractérisée en ce que** le disque de carte à circuits imprimés (6) est clipsé ou collé à l'intérieur.

7. Bobine d'armature de type cloche selon l'une des revendications 1 à 6,
**caractérisée en ce que** des capteurs de Hall (18) sont disposés sur la carte à circuits imprimés (3, 6) comme capteurs de position de rotation.

8. Bobine d'armature de type cloche selon l'une des revendications 1 à 7,
**caractérisée en ce qu'**un commutateur mécanique avec arbre, disposé de façon concentrique par rapport à l'axe de bobine, est fixé sur la carte à circuits imprimés (3).

9. Bobine d'armature de type cloche selon l'une des revendications 1 à 8,
**caractérisée en ce que** le fil d'enroulement est conçu sous la forme d'un fil de retour.

10. Bobine d'armature de type cloche selon l'une des revendications 1 à 9,
**caractérisée en ce que** l'enroulement de bobine (2) est enrobé d'une couche plastique.

11. Bobine d'armature de type cloche selon l'une des revendications 1 à 10,
**caractérisée en ce que** la plaque à circuits imprimés (3) est conçue avec un dispositif de serrage de fil (21).
